(19)
European Patent Office

Office européen des brevets

(11) **EP 4 067 434 B1**

(12) **EUROPEAN PATENT SPECIFICATION**

(45) Date of publication and mention
of the grant of the patent:
**23.07.2025 Bulletin 2025/30**

(21) Application number: **20894270.6**

(22) Date of filing: **18.11.2020**

(51) International Patent Classification (IPC):
*C08L 69/00* (2006.01)    *C08L 51/04* (2006.01)
*C08L 51/08* (2006.01)    *C08K 3/38* (2006.01)
*C08K 7/00* (2006.01)     *C08K 3/013* (2018.01)
*C08K 5/521* (2006.01)

(52) Cooperative Patent Classification (CPC):
(C-Sets available)
**C08L 69/00;** C08K 2003/387          (Cont.)

(86) International application number:
**PCT/KR2020/016273**

(87) International publication number:
**WO 2021/107487 (03.06.2021 Gazette 2021/22)**

(54) **THERMOPLASTIC RESIN COMPOSITION, AND MOLDED PRODUCT PRODUCED THEREFROM**

THERMOPLASTISCHE HARZZUSAMMENSETZUNG UND DARAUS HERGESTELLTES
FORMPRODUKT

COMPOSITION DE RÉSINE THERMOPLASTIQUE ET PRODUIT MOULÉ PRODUIT À PARTIR DE
CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.11.2019 KR 20190156605**

(43) Date of publication of application:
**05.10.2022 Bulletin 2022/40**

(73) Proprietor: **Lotte Chemical Corporation
Seoul, 05551 (KR)**

(72) Inventors:
• **LEE, Woo Jin
Uiwang-Si Gyeonggi-do 16073 (KR)**

• **PARK, Sang Ki
Uiwang-Si Gyeonggi-do 16073 (KR)**
• **LEE, Su Yeon
Uiwang-Si Gyeonggi-do 16073 (KR)**
• **JUN, Beom Sun
Uiwang-Si Gyeonggi-do 16073 (KR)**

(74) Representative: **Germain Maureau
12, rue Boileau
69006 Lyon (FR)**

(56) References cited:
**EP-A1- 3 330 318        JP-A- 2018 168 282
KR-A- 20150 127 081    KR-A- 20160 022 257
KR-A- 20160 079 786    KR-A- 20190 125 583**

**(Cont. next page)**

(52) Cooperative Patent Classification (CPC): (Cont.)

C-Sets
**C08L 69/00, C08L 23/0869, C08K 3/38,
C08K 5/523, C08K 3/34;
C08L 69/00, C08L 51/04, C08K 3/38, C08K 5/523,
C08K 3/34;
C08L 69/00, C08L 51/085, C08K 3/38, C08K 5/523,
C08K 3/34**

**Description**

[Technical Field]

The present invention relates to a thermoplastic resin composition and a molded product produced therefrom. More particularly, the present invention relates to a thermoplastic resin composition that has good properties in terms of flame retardancy, low heat-generation characteristics, low flammability, and the like, and does not have smoke toxicity, and a molded product produced therefrom.

[Background Art]

Conventionally, metallic materials are used as interior and exterior materials for transportation facilities, such as automobiles, railroad vehicles, and the like. In recent years, however, with increasing demand for improvement in fuel efficiency, various studies have been actively made to replace the metallic materials with lightweight plastic materials. For stability of passengers, materials for transportation facilities are strictly required to have low flammability, flame retardancy, low heat-generation characteristics, low smoke toxicity, and the like in order to prevent or reduce generation of smoke upon fire generation.

A polycarbonate resin has good properties in terms of formability, mechanical properties comprising impact resistance and tensile strength, electrical properties, transparency, and the like, and thus is broadly used in automobile and electronic products. Conventionally, a thermoplastic resin composition prepared by blending the polycarbonate resin with an acrylonitrile-butadiene-styrene (ABS) resin, followed by adding a phosphorus-based flame retardant to the mixture is used. Despite good properties in terms of formability, heat resistance, moisture resistance, impact resistance, and flame resistance, such a thermoplastic resin composition is not suitable for transportation facilities due to generation of an excess of smoke upon combustion thereof. For this reason, a polyimide resin or a polyamide resin is generally used in the field of transportation. However, the polyimide resin and the polyamide resin have disadvantages, such as high price, poor formability, and poorer mechanical properties than a polycarbonate resin.

Therefore, there is a need for development of a thermoplastic resin composition that has no smoke toxicity and exhibits good properties in terms of flame retardancy, low heat-generation characteristics, low flammability, and the like while maintaining good properties in terms of impact resistance, heat resistance and formability of a polycarbonate resin.

The background technique of the present invention is disclosed in Korean Patent Laid-open Publication No. 10-2012-0078559 and the like. KR20190125583A discloses polycarbonate resin compositions having excellent flame retardancy.

[Disclosure]

[Technical Problem]

It is one object of the present invention to provide a thermoplastic resin composition that has no smoke toxicity and exhibits good properties in terms of flame retardancy, low heat-generation characteristics, low flammability, and the like.

It is another object of the present invention to provide a molded product formed of the thermoplastic resin composition.

The above and other objects of the present invention can be achieved by the present invention described below.

[Technical Solution]

1. One aspect of the present invention relates to a thermoplastic resin composition. The thermoplastic resin composition consisting essentially of : about 100 parts by weight of a polycarbonate resin; about 4 parts by weight to about 20 parts by weight of a core-shell structured rubber-modified vinyl graft copolymer; about 4 parts by weight to about 25 parts by weight of zinc borate; about 3 parts by weight to about 25 parts by weight of bisphenol-A bis(diphenyl phosphate); about 2 parts by weight to about 20 parts by weight of biphenol bis(diphenyl phosphate); and about 10 parts by weight to about 42 parts by weight of flake-shaped inorganic fillers, wherein the thermoplastic resin composition has a maximum average rate of heat emission (MARHE) of 30 $kW/m^2$ to 95 $kW/m^2$ , as measured on a specimen having a size of 100 mm x 100 mm x 2 to 4 mm at a heat quantity of 50 $kW/m^2$ in accordance with ISO 5660-1.

2. In embodiment 1, the core-shell structured rubber-modified vinyl graft copolymer may be prepared by graft polymerization of an alkyl (meth)acrylate monomer to a silicone rubber polymer.

3. In embodiment 1 or 2, a weight ratio of the zinc borate to the sum of the bisphenol-A bis(diphenyl phosphate) and the biphenol bis(diphenyl phosphate) (zinc borate:sum of bisphenol-A bis(diphenyl phosphate) and biphenol bis(diphenyl phosphate)) may range from about 1:0.1 to about 1:5.

4. In embodiments 1 to 3, a weight ratio of the bisphenol-A bis(diphenyl phosphate) to the biphenol bis(diphenyl phosphate) (bisphenol-A bis(diphenyl phosphate):biphenol bis(diphenyl phosphate)) may range from about 1:0.1 to about 1:3.

5. In embodiments 1 to 4, the thermoplastic resin composition may have a flame retardancy of V-0 or higher, as measured on a 0.75 mm thick specimen in accordance with a UL-94 vertical test method.

6. In embodiments 1 to 5, the thermoplastic resin composition may have a specific optical density at 4 min (Ds(4)) of about 100 to about 300, as measured on a specimen having a size of 75 mm x 75 mm x 2 to 4 mm at a heat quantity of 25 $kW/m^2$ in accordance with ISO 5659-2.

7. In embodiments 1 to 6, the thermoplastic resin composition may have a cumulative value of specific optical densities in the first 4 min of the test (VOF(4)) of about 100 min to about 600 min, as measured on a specimen having a size of 75 mm x 75 mm x 2 to 4 mm at a heat quantity of 25 $kW/m^2$ in accordance with ISO 5659-2.

8. In embodiments 1 to 7, the thermoplastic resin composition may have a smoke toxicity (CIT, conventional index of toxicity) of about 0 to about 0.3, as measured on a specimen having a size of 75 mm x 75 mm x 2 to 4 mm at a heat quantity of 25 $kW/m^2$ in accordance with ISO 5659-2.

9. Another aspect of the present invention relates to a molded product. The molded product is formed of the thermoplastic resin composition according to any one of Embodiments 1 to 8.

[Advantageous Effects]

The present invention provides a thermoplastic resin composition that has no smoke toxicity and exhibits good properties in terms of flame retardancy, low heat-generation characteristics, low flammability, and the like, and a molded product produced therefrom.

[Best Mode]

Hereinafter, embodiments of the present invention will be described in detail.

A thermoplastic resin composition according to the present invention consists essentially of : (A) a polycarbonate resin; (B) a core-shell structured rubber-modified vinyl graft copolymer; (C) zinc borate; (D) bisphenol-A bis(diphenyl phosphate); (E) biphenol bis(diphenyl phosphate); and (F) flake-shaped inorganic fillers.

As used herein to represent a specific numerical range, the expression "a to b" means "$\geq$ a and $\leq$ b".

(A) Polycarbonate resin

The polycarbonate resin according to one embodiment of the invention may comprise any polycarbonate resin used in typical thermoplastic resin compositions. For example, the polycarbonate resin may be an aromatic polycarbonate resin prepared by reacting a diphenol (aromatic diol compound) with a carbonate precursor, such as phosgene, halogen formate, and carbonate diester.

In some embodiments, the diphenol may comprise, for example, 4,4'-biphenol, 2,2-bis(4-hydroxyphenyl) propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, 2,2-bis(3-methyl-4-hydroxyphenyl)propane, and 2,2-bis(3,5-dimethyl-4-hydroxyphenyl)propane, without being limited thereto. For example, the diphenol may be 2,2-bis(4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, or 1,1-bis(4-hydroxyphenyl)cyclohexane, specifically 2,2-bis(4-hydroxyphenyl)propane, which is also referred to as bisphenol-A.

In some embodiments, the carbonate precursor may comprise, for example, dimethyl carbonate, diethyl carbonate, dibutyl carbonate, dicyclohexyl carbonate, diphenyl carbonate, ditolyl carbonate, bis(chlorophenyl) carbonate, m-cresyl carbonate, dinaphthyl carbonate, carbonyl chloride (phosgene), diphosgene, triphosgene, carbonyl bromide, bishaloformate, and the like. These may be used alone or as a mixture thereof.

The polycarbonate resin may be a branched polycarbonate resin. For example, the polycarbonate resin may be prepared by adding a tri- or higher polyfunctional compound, specifically, a tri- or higher valent phenol group-containing compound, in an amount of about 0.05 mol% to about 2 mol% based on the total number of moles of the diphenols used in polymerization.

In some embodiments, the polycarbonate resin may be a homopolycarbonate resin, a copolycarbonate resin, or a blend thereof. In addition, the polycarbonate resin may be partly or completely replaced by an aromatic polyester-carbonate resin obtained by polymerization in the presence of an ester precursor, for example, a bifunctional carboxylic acid.

In some embodiments, the polycarbonate resin may have a weight average molecular weight (Mw) of about 10,000 g/mol to about 200,000 g/mol, for example, about 15,000 g/mol to about 40,000 g/mol, as measured by gel permeation chromatography (GPC). Within this range, the thermoplastic resin composition can exhibit good properties in terms of impact resistance, rigidity, heat resistance, and the like. The polycarbonate resin may be a mixture of at least two polycarbonate resins having different weight average molecular weights.

(B) Core-shell structured rubber-modified vinyl graft copolymer

The core-shell structured rubber-modified vinyl graft copolymer according to one embodiment serves to improve impact resistance, flame retardancy and the like of the thermoplastic resin composition and may be prepared by graft polymerization of a vinyl monomer (alkyl (meth)acrylate monomer and the like) to a rubber polymer. Here, polymerization may be performed by any polymerization method known in the art, such as emulsion polymerization, suspension polymerization, and the like. The core-shell structured rubber-modified vinyl graft copolymer may have a core (rubber polymer)-shell (polymer of the vinyl monomer) structure.

In some embodiments, the rubber polymer may comprise silicone rubbers (robber polymer), diene rubbers, such as polybutadiene, poly(styrene-butadiene), and poly(acrylonitrile-butadiene), saturated rubbers obtained by adding hydrogen to the diene rubbers, isoprene rubbers, $C_2$ to $C_{10}$ alkyl (meth)acrylate rubbers, copolymers of $C_2$ to $C_{10}$ alkyl (meth)acrylate rubbers and styrene, ethylene-propylene-diene terpolymer (EPDM), and the like. These may be used alone or as a mixture thereof.

In some embodiments, the silicone rubber polymer may be prepared through polymerization of a rubber monomer comprising a silicone-based monomer, such as cyclosiloxane and the like. The cyclosiloxane may comprise, for example, hexamethylcyclotri siloxane, octamethylcyclotetrasiloxane, decamethylcyclopentasiloxane, dodecamethyl-cyclohexasiloxane, trimethyltriphenylcyclotrisiloxane, tetramethyltetraphenylcyclotetrasiloxane, octaphenylcyclotetrasi-loxane, and the like. Here, trimethoxymethylsilane, triethoxyphenylsilane, tetramethoxysilane, or tetraethoxysilane may be used as a curing agent. The silicone rubber polymer may be a silicone-based acrylate rubber, such as polydimethylsiloxane/butyl acrylate rubber (PDMS/BA) and the like.

In some embodiments, the rubber polymer (rubber particles) may have an average particle diameter (D50) of about 0.05 μm to about 6 μm, for example, about 0.15 μm to about 4 μm, specifically about 0.25 μm to about 3.5 μm. Within this range, the thermoplastic resin composition can have good impact resistance, appearance characteristics, and the like. Here, the average particle diameter of the rubber polymer may be measured by a dry method using a Mastersizer 2000E series (Malvern Co., Ltd.).

In some embodiments, the vinyl monomer may be selected from among an alkyl (meth)acrylate monomer, an aromatic vinyl monomer, and combinations thereof.

In some embodiments, the alkyl (meth)acrylate monomer may be graft polymerizable with the rubber polymer and may comprise methyl (meth)acrylate, ethyl (meth)acrylate, propyl (meth)acrylate, butyl (meth)acrylate, and epoxy group-containing alkyl (meth)acrylate monomers, such as glycidyl (meth)acrylate and the like. These may be used alone or as a mixture thereof.

In some embodiments, the aromatic vinyl monomer may be graft copolymerizable with the rubber polymer and may comprise, for example, styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene, and the like. These may be used alone or as a mixture thereof.

In some embodiments, the core-shell structured rubber-modified vinyl graft copolymer may comprise a graft copolymer, g-ABS, and the like, which are obtained through graft polymerization of the alkyl (meth)acrylate monomer to the silicone rubber polymer.

In some embodiments, the rubber polymer may be present in an amount of about 20 wt% to about 85 wt%, for example, about 40 wt% to about 85 wt%, and the vinyl monomer may be present in an amount of about 15 wt% to about 80 wt%, for example, about 15 wt% to about 60 wt%, based on 100 wt% of the core-shell structured rubber-modified vinyl graft copolymer. Within this range, the thermoplastic resin composition can exhibit good impact resistance, flame retardancy, and the like.

The core-shell structured rubber-modified vinyl graft copolymer may be present in an amount of about 4 to about 20 parts by weight, for example, about 5 to about 18 parts by weight, relative to about 100 parts by weight of the polycarbonate resin. If the content of the core-shell structured rubber-modified vinyl graft copolymer is less than about 4 parts by weight relative to about 100 parts by weight of the polycarbonate resin, the thermoplastic resin composition can suffer from deterioration in impact resistance, low heat-generation characteristics, low flammability, and the like, and if the content of the core-shell structured rubber-modified vinyl graft copolymer exceeds about 20 parts by weight, the thermoplastic resin composition can suffer from deterioration in appearance characteristics, formability, low flammability, and the like.

## (C) Zinc borate

According to one embodiment, zinc borate serves to improve flame retardancy, low heat-generation characteristics, low flammability, and the like of the thermoplastic resin composition in conjunction with bisphenol-A bis(diphenyl phosphate) and biphenol bis(diphenyl phosphate), and may comprise zinc borate (anhydride), zinc borate hydrate, and combinations thereof.

In some embodiments, the metal zinc borate may have various shapes and sizes. For example, the metal inorganic compound may have an average particle size (D50) of about 1 μm to about 150 μm, for example, about 3 μm to about 15 μm, as measured by a method for laser diffraction measurement of a particle size.

The zinc borate may be present in an amount of about 4 to about 25 parts by weight, for example, about 5 to about 22 parts by weight, relative to about 100 parts by weight of the polycarbonate resin. If the content of the zinc borate is less than about 4 parts by weight relative to about 100 parts by weight of the polycarbonate resin, the thermoplastic resin composition can suffer from deterioration in low heat-generation characteristics, low flammability, and the like, and if the content of the zinc borate exceeds about 25 parts by weight, the thermoplastic resin composition can suffer from deterioration in impact resistance and the like.

## (D) Bisphenol-A bis(diphenyl phosphate)

According to one embodiment, bisphenol-A bis(diphenyl phosphate) serves to improve flame retardancy, low heat-generation characteristics, low flammability, and the like of the thermoplastic resin composition in conjunction with zinc borate and biphenol bis(diphenyl phosphate), and may contain about 7 wt% to about 10 wt%, for example, about 8.5 wt% to about 9.5 wt%, of phosphorus (P), based on 100 wt% of the total compound.

The bisphenol-A bis(diphenyl phosphate) may be present in an amount of about 3 to about 25 parts by weight, for example, about 5 to about 22 parts by weight, relative to about 100 parts by weight of the polycarbonate resin. If the content of the bisphenol-A bis(diphenyl phosphate) is less than about 3 parts by weight relative to about 100 parts by weight of the polycarbonate resin, the thermoplastic resin composition can suffer from deterioration in low heat-generation characteristics, low flammability, and the like, and if the content of the bisphenol-A bis(diphenyl phosphate) exceeds about 25 parts by weight, the thermoplastic resin composition can suffer from deterioration in low flammability, impact resistance, and the like.

## (E) Biphenol bis(diphenyl phosphate)

According to one embodiment, biphenol bis(diphenyl phosphate) serves to improve flame retardancy, low heat-generation characteristics, low flammability, and the like of the thermoplastic resin composition in conjunction with zinc borate and bisphenol-A bis(diphenyl phosphate), and may contain about 7 wt% to about 11 wt%, for example, about 9 wt% to about 10 wt%, of phosphorus (P), based on 100 wt% of the total compound.

The biphenol bis(diphenyl phosphate) may be present in an amount of about 2 to about 20 parts by weight, for example, about 2 to about 18 parts by weight, relative to about 100 parts by weight of the polycarbonate resin. If the content of the biphenol bis(diphenyl phosphate) is less than about 2 parts by weight relative to about 100 parts by weight of the polycarbonate resin, the thermoplastic resin composition can suffer from deterioration in low heat-generation characteristics, low flammability, and if the content of the biphenol bis(diphenyl phosphate) exceeds about 20 parts by weight, the thermoplastic resin composition can suffer from deterioration in low flammability, impact resistance, heat resistance, and the like.

In some embodiments, the weight ratio (C:D+E) of the zinc borate (C) to the sum of the bisphenol-A bis(diphenyl phosphate) (D) and the biphenol bis(diphenyl phosphate) (E) may range from about 1:0.1 to about 1:5, for example, from about 1:0.5 to about 1:4. Within this range, the thermoplastic resin composition can exhibit good properties in terms of flame retardancy, low heat-generation characteristics, low flammability, and the like.

In some embodiments, the weight ratio (D:E) of the bisphenol-A bis(diphenyl phosphate) (D) to the biphenol bis(diphenyl phosphate) (E) may range from about 1:0.1 to about 1:3, for example, about 1:0.1 to about 1:2. Within this range, the thermoplastic resin composition can exhibit good properties in terms of flame retardancy, low heat-generation characteristics, low flammability, and the like.

## (F) Flake-shaped inorganic fillers

According to one embodiment, the flake-shaped inorganic fillers prevent decomposed flammable materials of a resin from being discharged from the surface of the resin upon combustion of the resin composition to improve flame retardancy, low heat-generation characteristics and low flammability while improving rigidity thereof, and may comprise typical flake-shaped inorganic fillers.

In some embodiments, the flake-shaped inorganic fillers may comprise talc, mica, and combinations thereof. For example, typical flake-shaped talc may be used. The flake-shaped inorganic fillers may have an average particle size of about 2 μm to about 10 μm, for example, about 3 μm to about 7 μm, as measured using a Malvern Mastersizer 300. Within this range, the thermoplastic resin composition can exhibit good properties in terms of flame retardancy, rigidity, fluidity, appearance characteristics, and the like.

The flake-shaped inorganic fillers may be present in an amount of about 10 parts by weight to about 42 parts by weight, for example, about 12 parts by weight to about 40 parts by weight, relative to about 100 parts by weight of the polycarbonate resin. If the content of the flake-shaped inorganic fillers is less than about 10 parts by weight relative to about 100 parts by weight of the polycarbonate resin, the thermoplastic resin composition can suffer from deterioration in low heat-generation characteristics, low flammability, and the like, and if the content of the flake-shaped inorganic fillers exceeds about 42 parts by weight, the thermoplastic resin composition can suffer from deterioration in appearance characteristics, impact resistance, and the like.

The thermoplastic resin composition according to one embodiment may be prepared by a typical preparation method known in the art. For example, the thermoplastic resin composition may be prepared in pellet form by mixing the aforementioned components and other additives, as needed, followed by melt extrusion at about 200°C to about 300°C, for example, about 250°C to about 280°C, using a typical twin-screw extruder.

In some embodiments, the thermoplastic resin composition may have a flame retardancy of V0 or higher, as measured on a 0.75 mm thick specimen by a UL-94 vertical test method.

The thermoplastic resin composition has a maximum average rate of heat emission (MARHE) of about 30 kW/m$^2$ to about 95 kW/m$^2$, for example, about 40 kW/m$^2$ to about 90 kW/m$^2$, as measured on a specimen having a size of 100 mm x 100 mm x 2 to 4 mm at a heat quantity of 50 kW/m$^2$ in accordance with ISO 5660-1.

In some embodiments, the thermoplastic resin composition may have a specific optical density at 4 min (Ds(4)) of about 100 to about 300 (a.u. (arbitrary unit)), for example, about 150 to about 300, as measured on a specimen having a size of 75 mm x 75 mm x 2 to 4 mm at a heat quantity of 25 kW/m$^2$ in accordance with ISO 5659-2.

In some embodiments, the thermoplastic resin composition may have a cumulative value of specific optical densities in the first 4 min of the test (VOF(4)) of about 100 min to about 600 min, for example, about 110 min to about 600 min, as measured on a specimen having a size of 75 mm x 75 mm x 2 to 4 mm at a heat quantity of 25 kW/m$^2$ in accordance with ISO 5659-2.

In some embodiments, the thermoplastic resin composition may have a smoke toxicity (CIT, conventional index of toxicity) of about 0 to about 0.3 (a.u. (arbitrary unit)), for example, about 0 to about 0.05, as measured on a specimen having a size of 75 mm x 75 mm x 2 to 4 mm at a heat quantity of 25 kW/m$^2$ in accordance with ISO 5659-2.

In some embodiments, the thermoplastic resin composition may have a notched Izod impact strength of about 3 kgf·cm/cm to about 40 kgf·cm/cm, for example, about 4 kgf·cm/cm to about 30 kgf·cm/cm, as measured on a 3.2 mm thick specimen in accordance with ASTM D256.

A molded product according to the present invention is produced from the thermoplastic resin composition as set forth above. The thermoplastic resin composition may be produced into various products (articles) by various molding methods, such as injection molding, extrusion molding, vacuum molding, and casting. These molding methods are well known to those skilled in the art. The molded product exhibits good properties in terms of flame retardancy, low heat-generation characteristics, low flammability, and the like, has no smoke toxicity, and satisfies EN45545-2 R6HL2 (European railway standard for fire safety). The molded product can be advantageously used as interior or exterior materials for transportation facilities, such as automobile parts and railway vehicle components.

[Mode for Invention]

Next, the present invention will be described in more detail with reference to some examples. It should be understood that these examples are provided for illustration only and are not to be construed in any way as limiting the invention.

EXAMPLE

Details of components used in Examples and Comparative Examples are as follows.

(A) Polycarbonate resin

A bisphenol-A polycarbonate resin (weight average molecular weight (Mw): 28,000 g/mol) was used.

(B) Impact modifier

(B1) A silicone-based core-shell impact modifier (Manufacturer: MRC, Product Name: SX-005) prepared by graft polymerization of an acrylic monomer to a silicone rubber polymer was used as a core-shell structured rubber-modified vinyl graft copolymer.

(B2) An ethylene/methyl acrylate copolymer (Manufacturer: Dupont, Product Name: Elvaloy AC1330) was used.

(C) Zinc borate

(C1) Zinc borate (anhydride) (Manufacturer: Rio Tinto Minerals, Product Name: Firebrake 500) was used.

(C2) Zinc borate hydrate (Manufacturer: Rio Tinto Minerals, Product Name: Firebrake 415) was used.

(C3) Aluminum hydride (Manufacturer: Daemyung Chemical) was used.

(D) Bisphenol-A bis(diphenyl phosphate)

Bisphenol-A bis(diphenyl phosphate) (Manufacturer: Daihachi, Product Name: CR-741) containing 8.9 wt% of phosphorus was used.

(E) Biphenol bis(diphenyl phosphate)

Biphenol bis(diphenyl phosphate) (Manufacturer: Adeka, Product Name: FP-900) containing 8.9 wt% of phosphorus was used.

(F) Resorcinol diphenyl phosphate (Manufacturer: Daihachi, Product Name: CR733) was used.

(G) Inorganic fillers

(G1) Talc (Manufacturer: Imi-Fabi, Product Name: HTP05L) was used as flake-shaped inorganic fillers.

(G2) Whisker (Manufacturer: Otsuka, Product Name: TISMO-D) was used as acicular inorganic fillers.

**Examples 1 to 12 and Comparative Examples 1 to 15: Preparation and evaluation of thermoplastic resin composition**

The above components were prepared in amounts as listed in Tables 1, 2, 3 and 4, and mixed with 1 part by weight of an anti-dripping agent (PTFE, GCC Korea, AD-541), 0.2 parts by weight of an antioxidant (Songwon Industry, SONGNOX-1076 and Miwon Commercial. ALKANOX 240) and 0.3 parts by weight of a release agent (Hengel, LOXIOL EP-861) relative to 100 parts by weight of a polycarbonate resin, followed by extrusion under conditions of 280°C, thereby preparing pellets. Extrusion was performed using a twin-screw extruder (L/D=36, Φ: 45 mm) and the prepared pellets were dried at 80°C for 4 hours or more and injection-molded in a 120-ton injection molding machine (molding temperature: 280°C, mold temperature: 80°C), thereby preparing specimens. The prepared specimens were evaluated as to the following properties by the following method, and results are shown in Tables 1, 2, 3 and 4.

Property Measurement

(1) Flame retardancy: Flame retardancy was measured on a 0.75 mm thick specimen by a UL-94 vertical test method.

(2) MARHE (unit: KW/m$^2$): Maximum average rate of heat emission (MARHE) was measured on a specimen having a size of 100 mm x 100 mm x 2, 3 or 4 mm at a heat quantity of 50 kW/m$^2$ in accordance with ISO 5660-1 (cone calorimeter method).

(3) Ds(4) (no unit): ISO Specific optical density at 4 min (Ds(4)) was measured on a specimen having a size of 75 mm x 75 mm x 2, 3 or 4 mm in a smoke density chamber at a heat quantity of 25 kW/m$^2$ in accordance with ISO 5659-2.

$$Ds(4) = (V/A \times L) \log(100/T)$$

(V: Volume of test chamber, A: Exposed area of test specimen, L: Length of light beam, T: Relative transmittance of light at 4 min (%))

(4) VOF(4) (unit: min): Cumulative value of specific optical densities in the first 4 min of the test (VOF(4)) was measured on a specimen having a size of 75 mm x 75 mm x 2, 3 or 4 mm in a smoke density chamber at a heat quantity of 25 kW/m$^2$ in accordance with ISO 5659-2.

$$VOF(4) = [(Ds(1) + Ds(2) + Ds(3) + Ds(4))/2] \times 1 \text{ min}$$

(5) CIT (no unit): Smoke toxicity (CIT, conventional index of toxicity) was measured on a specimen having a size of 75 mm x 75 mm x 2, 3 or 4 mm in a smoke density chamber at a heat quantity of 25 kW/m$^2$ in accordance with ISO 5659-2.

(6) Notched Izod impact resistance (kgf·cm/cm): Notched Izod impact strength was measured on a 3.2 mm thick specimen in accordance with ASTM D256.

(7) Melt-flow index (MI, unit: g/10 min): Melt-flow index was measured under conditions of 300°C and 1.2 kgf in accordance with ASTM D1238.

(8) Vicat softening temperature (unit: °C): Vicat softening temperature was measured under conditions of 50 N and 120°C/hr in accordance with ISO 306/B50.

Table 1

| | | | Example | | | | | |
|---|---|---|---|---|---|---|---|---|
| | | | 1 | 2 | 3 | 4 | 5 | 6 |
| (A) (parts by weight) | | | 100 | 100 | 100 | 100 | 100 | 100 |
| (B1) (parts by weight) | | | 5 | 10 | 18 | 10 | 10 | 10 |
| (B2) (parts by weight) | | | - | - | - | - | - | - |
| (C1) (parts by weight) | | | 8 | 8 | 8 | 5 | 22 | - |
| (C2) (parts by weight) | | | - | - | - | - | - | 8 |
| (C3) (parts by weight) | | | - | - | - | - | - | - |
| (D) (parts by weight) | | | 11 | 11 | 11 | 11 | 11 | 11 |
| (E) (parts by weight) | | | 4 | 4 | 4 | 4 | 4 | 4 |
| (F) (parts by weight) | | | - | - | - | - | - | - |
| (G1) (parts by weight) | | | 24 | 24 | 24 | 24 | 24 | 24 |
| (G2) (parts by weight) | | | - | - | - | - | - | - |
| Flame retardancy | | | V-0 | V-0 | V-0 | V-0 | V-0 | V-0 |
| MARHE | | 2 mm | 89 | 70 | 65 | 90 | 58 | 74 |
| | | 3 mm | 88 | 70 | 58 | 89 | 57 | 81 |
| | | 4 mm | 85 | 68 | 55 | 88 | 61 | 82 |
| Ds(4) | | 2 mm | 291 | 200 | 281 | 291 | 180 | 235 |
| | | 3 mm | 281 | 189 | 251 | 281 | 170 | 220 |
| | | 4 mm | 288 | 175 | 288 | 287 | 160 | 207 |
| VOF(4) | | 2 mm | 588 | 410 | 591 | 591 | 250 | 440 |
| | | 3 mm | 589 | 198 | 548 | 599 | 210 | 201 |
| | | 4 mm | 595 | 167 | 544 | 585 | 118 | 178 |
| CIT | | 2 mm | 0.03 | 0.02 | 0.02 | 0.02 | 0.01 | 0.03 |
| | | 3 mm | 0.02 | 0.02 | 0.03 | 0.02 | 0.01 | 0.02 |
| | | 4 mm | 0.01 | 0.02 | 0.03 | 0.02 | 0.01 | 0.02 |
| Notched Izod impact strength | | | 4 | 5 | 30 | 8 | 4 | 6 |
| MI | | | 23 | 20 | 14 | 23 | 13 | 21 |

(continued)

| | Example | | | | | |
|---|---|---|---|---|---|---|
| | 1 | 2 | 3 | 4 | 5 | 6 |
| VST | 105 | 104 | 101 | 101 | 101 | 102 |

Table 2

| | | Example | | | | | |
|---|---|---|---|---|---|---|---|
| | | 7 | 8 | 9 | 10 | 11 | 12 |
| (A) (parts by weight) | | 100 | 100 | 100 | 100 | 100 | 100 |
| (B1) (parts by weight) | | 10 | 10 | 10 | 10 | 10 | 10 |
| (B2) (parts by weight) | | - | - | - | - | - | - |
| (C1) (parts by weight) | | 8 | 8 | 8 | 8 | 8 | 8 |
| (C2) (parts by weight) | | - | - | - | - | - | - |
| (C3) (parts by weight) | | - | - | - | - | - | - |
| (D) (parts by weight) | | 5 | 22 | 11 | 11 | 11 | 11 |
| (E) (parts by weight) | | 4 | 4 | 2 | 17 | 4 | 4 |
| (F) (parts by weight) | | - | - | - | - | - | - |
| (G1) (parts by weight) | | 24 | 24 | 24 | 24 | 12 | 40 |
| (G2) (parts by weight) | | - | - | - | - | - | - |
| Flame retardancy | | V-0 | V-0 | V-0 | V-0 | V-0 | V-0 |
| MARHE | 2 mm | 86 | 51 | 90 | 49 | 90 | 60 |
| | 3 mm | 88 | 53 | 85 | 48 | 89 | 58 |
| | 4 mm | 89 | 55 | 89 | 41 | 88 | 61 |
| Ds(4) | 2 mm | 250 | 281 | 250 | 291 | 291 | 200 |
| | 3 mm | 210 | 271 | 210 | 300 | 300 | 210 |
| | 4 mm | 280 | 280 | 280 | 299 | 299 | 150 |
| VOF(4) | 2 mm | 551 | 581 | 551 | 598 | 591 | 240 |
| | 3 mm | 482 | 551 | 482 | 597 | 594 | 244 |
| | 4 mm | 431 | 582 | 431 | 588 | 599 | 265 |
| CIT | 2 mm | 0.02 | 0.02 | 0.02 | 0.02 | 0.03 | 0.01 |
| | 3 mm | 0.02 | 0.02 | 0.02 | 0.02 | 0.04 | 0.01 |
| | 4 mm | 0.02 | 0.02 | 0.02 | 0.02 | 0.03 | 0.01 |
| Notched Izod impact strength | | 8 | 5 | 7 | 5 | 10 | 4 |
| MI | | 11 | 30 | 18 | 28 | 24 | 10 |
| VST | | 116 | 89 | 108 | 91 | 108 | 104 |

Table 3

| | Comparative Example | | | | | | | | |
|---|---|---|---|---|---|---|---|---|---|
| | 1 | 2 | 3 | 4 | 5 | 6 | 7 | 8 | 9 |
| (A) (parts by weight) | 100 | 100 | 100 | 100 | 100 | 100 | 100 | 100 | 100 |
| (B1) (parts by weight) | 3 | 25 | - | 10 | 10 | 10 | 10 | 10 | 10 |
| (B2) (parts by weight) | - | - | 10 | - | - | - | - | - | - |

(continued)

| | | Comparative Example | | | | | | | | |
|---|---|---|---|---|---|---|---|---|---|---|
| | | 1 | 2 | 3 | 4 | 5 | 6 | 7 | 8 | 9 |
| (C1) (parts by weight) | | 8 | 8 | 8 | 2 | 27 | - | 8 | 8 | 8 |
| (C2) (parts by weight) | | | | | | | | | | |
| (C3) (parts by weight) | | - | - | - | - | - | 8 | - | - | - |
| (D) (parts by weight) | | 11 | 11 | 11 | 11 | 11 | 11 | 2 | 27 | 11 |
| (E) (parts by weight) | | 4 | 4 | 4 | 4 | 4 | 4 | 4 | 4 | 1 |
| (F) (parts by weight) | | - | - | - | - | - | - | - | - | - |
| (G1) (parts by weight) | | 24 | 24 | 24 | 24 | 24 | 24 | 24 | 24 | 24 |
| (G2) (parts by weight) | | | | | | | | | | |
| Flame retardancy | | V-0 | V-0 | V-1 | V-0 | V-0 | V-0 | V-0 | V-0 | V-0 |
| MARHE | 2 mm | 98 | 60 | 100 | 91 | 60 | 91 | 99 | 51 | 110 |
| | 3 mm | 99 | 61 | 105 | 98 | 61 | 95 | 100 | 53 | 112 |
| | 4 mm | 98 | 62 | 104 | 91 | 61 | 64 | 98 | 55 | 113 |
| Ds(4) | 2 mm | 291 | 301 | 340 | 330 | 281 | 334 | 310 | 304 | 331 |
| | 3 mm | 284 | 300 | 330 | 340 | 251 | 354 | 331 | 310 | 320 |
| | 4 mm | 297 | 302 | 380 | 380 | 288 | 381 | 340 | 320 | 321 |
| VOF(4) | 2 mm | 688 | 610 | 620 | 680 | 591 | 681 | 601 | 588 | 620 |
| | 3 mm | 598 | 610 | 630 | 670 | 548 | 641 | 621 | 584 | 610 |
| | 4 mm | 584 | 591 | 710 | 771 | 544 | 540 | 610 | 601 | 620 |
| CIT | 2 mm | 0.03 | 0.02 | 0.03 | 0.03 | 0.02 | 0.02 | 0.02 | 0.02 | 0.02 |
| | 3 mm | 0.01 | 0.03 | 0.04 | 0.04 | 0.03 | 0.01 | 0.02 | 0.02 | 0.02 |
| | 4 mm | 0.03 | 0.03 | 0.04 | 0.03 | 0.03 | 0.02 | 0.02 | 0.02 | 0.02 |
| Notched Izod impact strength | | 2 | 35 | 8 | 6 | 1 | 3 | 9 | 2 | 7 |
| MI | | 25 | 13 | 20 | 23 | 14 | 20 | 10 | 35 | 13 |
| VST | | 106 | 100 | 104 | 104 | 101 | 104 | 118 | 83 | 110 |

Table 4

| | Comparative Example | | | | | |
|---|---|---|---|---|---|---|
| | 10 | 11 | 12 | 13 | 14 | 15 |
| (A) (parts by weight) | 100 | 100 | 100 | 100 | 100 | 100 |
| (B1) (parts by weight) | 10 | 10 | 10 | 10 | 10 | 10 |
| (B2) (parts by weight) | - | - | - | - | - | - |
| (C1) (parts by weight) | 8 | 8 | 8 | 8 | 8 | 8 |
| (C2) (parts by weight) | - | - | - | - | - | - |
| (C3) (parts by weight) | - | - | - | - | - | - |
| (D) (parts by weight) | 11 | - | 15 | 11 | 11 | 11 |
| (E) (parts by weight) | 22 | - | - | 4 | 4 | 4 |
| (F) (parts by weight) | - | 15 | - | - | - | - |
| (G1) (parts by weight) | 24 | 24 | 24 | 8 | 45 | - |

(continued)

| | | Comparative Example | | | | | |
|---|---|---|---|---|---|---|---|
| | | 10 | 11 | 12 | 13 | 14 | 15 |
| (G2) (parts by weight) | | - | - | - | - | - | 24 |
| Flame retardancy | | V-0 | V-0 | V-0 | V-0 | V-0 | V-0 |
| MARHE | 2 mm | 52 | 98 | 98 | 120 | 55 | 97 |
| | 3 mm | 53 | 99 | 99 | 110 | 55 | 94 |
| | 4 mm | 55 | 95 | 100 | 120 | 54 | 94 |
| Ds(4) | 2 mm | 308 | 310 | 280 | 350 | 180 | 300 |
| | 3 mm | 350 | 320 | 290 | 400 | 195 | 280 |
| | 4 mm | 321 | 330 | 288 | 380 | 191 | 290 |
| VOF(4) | 2 mm | 621 | 660 | 580 | 702 | 230 | 610 |
| | 3 mm | 588 | 640 | 590 | 770 | 220 | 590 |
| | 4 mm | 591 | 630 | 423 | 730 | 230 | 600 |
| CIT | 2 mm | 0.02 | 0.03 | 0.02 | 0.03 | 0.01 | 0.02 |
| | 3 mm | 0.02 | 0.03 | 0.02 | 0.04 | 0.01 | 0.03 |
| | 4 mm | 0.02 | 0.03 | 0.02 | 0.04 | 0.01 | 0.02 |
| Notched Izod impact strength | | 3 | 4 | 4 | 10 | 1 | 4 |
| MI | | 30 | 20 | 20 | 25 | 8 | 20 |
| VST | | 85 | 104 | 104 | 104 | 104 | 104 |

From the result, it could be seen that the thermoplastic resin compositions according to the present invention exhibited good properties in terms of flame retardancy, low heat-generation characteristics (MARHE), low flammability (DS(4), VOF(4)), smoke toxicity (CIT), and the like without deterioration in impact resistance, fluidity, heat resistance, and the like.

Conversely, it could be seen that the thermoplastic resin composition prepared using an insufficient amount of the core-shell structured rubber-modified vinyl graft copolymer (Comparative Example 1) exhibited deterioration in low heat-generation characteristics, low flammability, impact resistance, and the like; the thermoplastic resin composition prepared using an excess of the core-shell structured rubber-modified vinyl graft copolymer (Comparative Example 2) exhibited deterioration in low flammability and the like; and the thermoplastic resin composition prepared using the ethylene/methyl acrylate impact modifier (B2) instead of the core-shell structured rubber-modified vinyl graft copolymer (Comparative Example 3) suffered from deterioration in flame retardancy, low heat-generation characteristics, low flammability, and the like. In addition, it could be seen that the thermoplastic resin composition prepared using an insufficient amount of the zinc borate (Comparative Example 4) suffered from deterioration in low heat-generation characteristics, low flammability, and the like; the thermoplastic resin composition prepared using an excess of the zinc borate (Comparative Example 5) suffered from deterioration in impact resistance, and the like; and the thermoplastic resin composition prepared using aluminum hydride (C3) instead of the zinc borate (Comparative Example 6) suffered from deterioration in low heat-generation characteristics, low flammability, impact resistance, and the like. In addition, it could be seen that the thermoplastic resin composition prepared using an insufficient amount of the bisphenol-A bis(diphenyl phosphate) (Comparative Example 7) suffered from deterioration in low heat-generation characteristics, low flammability, and the like; the thermoplastic resin composition prepared using an excess of the bisphenol-A bis(diphenyl phosphate) (Comparative Example 8) suffered from deterioration in low flammability, impact resistance, and the like; the thermoplastic resin composition prepared using an insufficient amount of the biphenol bis(diphenyl phosphate) (Comparative Example 9) suffered from deterioration in low heat-generation characteristics, low flammability, and the like; the thermoplastic resin composition prepared using an excess of the biphenol bis(diphenyl phosphate) (Comparative Example 10) suffered from deterioration in low flammability, impact resistance, and the like; the thermoplastic resin composition prepared using resorcinol diphenyl phosphate (F) (Comparative Example 11) instead of the bisphenol-A bis(diphenyl phosphate) (D) and the biphenol bis(diphenyl phosphate) (E) suffered from deterioration in low heat-generation characteristics, low flammability, and the like; and the thermoplastic resin composition prepared using the bisphenol-A bis(diphenyl phosphate) (D) alone (Comparative Example 12) suffered from deterioration in low heat-generation characteristics, and the like. Further, it could be seen that the thermoplastic resin composition prepared using an insufficient amount of the flake-shaped inorganic fillers (Comparative Example 13) suffered from deterioration in low heat-generation characteristics, low flammability, and the like; the thermoplastic resin composition prepared using an excess of the flake-shaped inorganic fillers (Comparative Example 14) suffered from deterioration in impact resistance and the like; and the thermoplastic resin composition prepared using whisker (F2) as acicular inorganic fillers (Comparative Example 15) instead of the flake-shaped inorganic fillers suffered from deterioration in low heat-generation characteristics, low flammability, and the like.

It should be understood that various modifications, changes, alterations, and equivalent embodiments can be made by those skilled in the art without departing from the scope of the present invention.

**Claims**

1. A thermoplastic resin composition consisting essentially of:

   100 parts by weight of a polycarbonate resin;
   4 parts by weight to 20 parts by weight of a core-shell structured rubber-modified vinyl graft copolymer;
   4 parts by weight to 25 parts by weight of zinc borate;
   3 parts by weight to 25 parts by weight of bisphenol-A bis(diphenyl phosphate);
   2 parts by weight to 20 parts by weight of biphenol bis(diphenyl phosphate); and
   10 parts by weight to 42 parts by weight of flake-shaped inorganic fillers,
   wherein the thermoplastic resin composition has a maximum average rate of heat emission (MARHE) of 30 $kW/m^2$ to 95 $kW/m^2$, as measured on a specimen having a size of 100 mm x 100 mm x 2 to 4 mm at a heat quantity of 50 $kW/m^2$ in accordance with ISO 5660-1.

2. The thermoplastic resin composition according to claim 1, wherein the core-shell structured rubber-modified vinyl graft copolymer is prepared by graft polymerization of an alkyl (meth)acrylate monomer to a silicone rubber polymer.

3. The thermoplastic resin composition according to claim 1 or 2, wherein a weight ratio of the zinc borate to the sum of the bisphenol-A bis(diphenyl phosphate) and the biphenol bis(diphenyl phosphate) (zinc borate:sum of bisphenol-A bis(diphenyl phosphate) and biphenol bis(diphenyl phosphate)) ranges from 1:0.1 to 1:5.

4. The thermoplastic resin composition according to any one of claims 1 to 3, wherein a weight ratio of the bisphenol-A bis(diphenyl phosphate) to the biphenol bis(diphenyl phosphate) (bisphenol-A bis(diphenyl phosphate):biphenol bis(diphenyl phosphate)) ranges from 1:0.1 to 1:3.

5. The thermoplastic resin composition according to any one of claims 1 to 4, wherein the thermoplastic resin composition has a flame retardancy of V-0 or higher, as measured on a 0.75 mm thick specimen in accordance with a UL-94 vertical test method.

6. The thermoplastic resin composition according to any one of claims 1 to 5, wherein the thermoplastic resin composition has a specific optical density at 4 min (Ds(4)) of 100 to 300, as measured on a specimen having a size of 75 mm x 75 mm x 2 to 4 mm at a heat quantity of 25 $kW/m^2$ in accordance with ISO 5659-2.

7. The thermoplastic resin composition according to any one of claims 1 to 6, wherein the thermoplastic resin composition has a cumulative value of specific optical densities in the first 4 min of the test (VOF(4)) of 100 min to 600 min, as measured on a specimen having a size of 75 mm x 75 mm x 2 to 4 mm at a heat quantity of 25 $kW/m^2$ in accordance with ISO 5659-2.

8. The thermoplastic resin composition according to any one of claims 1 to 7, wherein the thermoplastic resin composition has a smoke toxicity (CIT, conventional index of toxicity) of 0 to 0.3, as measured on a specimen having a size of 75 mm x 75 mm x 2 to 4 mm at a heat quantity of 25 $kW/m^2$ in accordance with ISO 5659-2.

9. A molded product formed of the thermoplastic resin composition according to any one of claims 1 to 8.

**Patentansprüche**

1. Thermoplastische Harzzusammensetzung, im Wesentlichen bestehend aus:

100 Gewichtsteilen eines Polycarbonatharzes;

4 Gewichtsteilen bis 20 Gewichtsteilen eines kautschukmodifizierten Vinylpfropf-Copolymers mit Kern-Schale-Struktur;

4 Gewichtsteilen bis 25 Gewichtsteilen Zinkborat;

3 Gewichtsteilen bis 25 Gewichtsteilen Bisphenol-A-bis(diphenylphosphat);

2 Gewichtsteilen bis 20 Gewichtsteilen Biphenolbis(diphenylphosphat); und

10 Gewichtsteilen bis 42 Gewichtsteilen flockenförmiger anorganischer Füllstoffe,

wobei die thermoplastische Harzzusammensetzung eine maximale durchschnittliche Wärmeemissionsrate (MARHE) von 30 kW/m$^2$ bis 95 kW/m$^2$ aufweist, gemessen an einer Probe mit einer Größe von 100 mm x 100 mm x 2 bis 4 mm bei einer Wärmemenge von 50 kW/m$^2$ gemäß ISO 5660-1.

2. Thermoplastische Harzzusammensetzung nach Anspruch 1, wobei das kautschukmodifizierte Vinylpfropf-Copolymer mit Kern-Schale-Struktur durch Pfropfpolymerisation eines Alkyl(meth)acrylatmonomers auf ein Silikonkautschukpolymer hergestellt wird.

3. Thermoplastische Harzzusammensetzung nach Anspruch 1 oder 2, wobei ein Gewichtsverhältnis des Zinkborats zur Summe des Bisphenol-A-bis(diphenylphosphats) und des Biphenol-bis(diphenylphosphats) (Zinkborat: Summe von Bisphenol-A-bis(diphenylphosphat) und Biphenol-bis(diphenylphosphat)) von 1:0,1 bis 1:5 beträgt.

4. Thermoplastische Harzzusammensetzung nach einem der Ansprüche 1 bis 3, wobei ein Gewichtsverhältnis des Bisphenol-A-bis(diphenylphosphats) zu dem Biphenol-bis(diphenylphosphat) (Bisphenol-A-bis(diphenylphosphat):Biphenol-bis(diphenylphosphat)) von 1:0,1 bis 1:3 beträgt.

5. Thermoplastische Harzzusammensetzung nach einem der Ansprüche 1 bis 4, wobei die thermoplastische Harzzusammensetzung eine Flammwidrigkeit von V-0 oder höher aufweist, gemessen an einer 0,75 mm dicken Probe gemäß einem vertikalen UL-94-Prüfverfahren.

6. Thermoplastische Harzzusammensetzung nach einem der Ansprüche 1 bis 5, wobei die thermoplastische Harzzusammensetzung eine spezifische optische Dichte bei 4 min (Ds(4)) von 100 bis 300 aufweist, gemessen an einer Probe mit einer Größe von 75 mm x 75 mm x 2 bis 4 mm bei einer Wärmemenge von 25 kW/m$^2$ gemäß ISO 5659-2.

7. Thermoplastische Harzzusammensetzung nach einem der Ansprüche 1 bis 6, wobei die thermoplastische Harzzusammensetzung einen kumulativen Wert der spezifischen optischen Dichten in den ersten 4 Minuten der Prüfung (VOF(4)) von 100 min bis 600 min aufweist, gemessen an einer Probe mit einer Größe von 75 mm x 75 mm x 2 bis 4 mm bei einer Wärmemenge von 25 kW/m$^2$ gemäß ISO 5659-2.

8. Thermoplastische Harzzusammensetzung nach einem der Ansprüche 1 bis 7, wobei die thermoplastische Harzzusammensetzung eine Rauchtoxizität (CIT, Conventional Index of Toxicity) von 0 bis 0,3 aufweist, gemessen an einer Probe mit einer Größe von 75 mm x 75 mm x 2 bis 4 mm bei einer Wärmemenge von 25 kW/m$^2$ gemäß ISO 5659-2.

9. Formartikel, der aus der thermoplastischen Harzzusammensetzung nach einem der Ansprüche 1 bis 8 hergestellt ist.

**Revendications**

1. Composition de résine thermoplastique constituée essentiellement de :

100 parties en poids d'une résine de polycarbonate ;

4 parties en poids à 20 parties en poids d'un copolymère greffé vinylique modifié par du caoutchouc à structure noyau-enveloppe ;

4 parties en poids à 25 parties en poids de borate de zinc ;

3 parties en poids à 25 parties en poids de bisphénol-A bis(diphénylphosphate) ;

2 parties en poids à 20 parties en poids de biphénol bis(diphénylphosphate) ; et

10 parties en poids à 42 parties en poids de charges inorganiques en forme de flocons,

dans laquelle la composition de résine thermoplastique a un taux moyen maximal d'émission de chaleur (MARHE) allant de 30 kW/m$^2$ à 95 kW/m$^2$, tel que mesuré sur un spécimen ayant une taille de 100 mm x 100 mm x 2 à 4 mm à une quantité de chaleur de 50 kW/m$^2$ conformément à la norme ISO 5660-1.

**2.** Composition de résine thermoplastique selon la revendication 1, dans laquelle le copolymère greffé vinylique modifié par du caoutchouc à structure noyau-enveloppe est préparé par polymérisation avec greffage d'un monomère de (méth)acrylate d'alkyle à un polymère de caoutchouc de silicone.

**3.** Composition de résine thermoplastique selon la revendication 1 ou 2, dans laquelle un rapport pondéral du borate de zinc sur la somme du bisphénol-A bis(diphénylphosphate) et du biphénol bis(diphénylphosphate) (borate de zinc : somme du bisphénol-A bis(diphénylphosphate) et du biphénol bis(diphénylphosphate)) se trouve dans une plage allant de 1:0,1 à 1:5.

**4.** Composition de résine thermoplastique selon l'une quelconque des revendications 1 à 3, dans laquelle un rapport pondéral du bisphénol-A bis(diphénylphosphate) sur le biphénol bis(diphénylphosphate) (bisphénol-A bis(diphénylphosphate) : biphénol bis(diphénylphosphate)) se trouve dans une plage allant de 1:0,1 à 1:3.

**5.** Composition de résine thermoplastique selon l'une quelconque des revendications 1 à 4, dans laquelle la composition de résine thermoplastique a une ininflammabilité de V-0 ou plus, telle que mesurée sur un spécimen de 0,75 mm d'épaisseur conformément à une méthode de test vertical UL-94.

**6.** Composition de résine thermoplastique selon l'une quelconque des revendications 1 à 5, dans laquelle la composition de résine thermoplastique a une densité optique spécifique à 4 min (Ds(4)) allant de 100 à 300, telle que mesurée sur un spécimen ayant une taille de 75 mm x 75 mm x 2 à 4 mm à une quantité de chaleur de 25 kW/m$^2$ conformément à la norme ISO 5659-2.

**7.** Composition de résine thermoplastique selon l'une quelconque des revendications 1 à 6, dans laquelle la composition de résine thermoplastique a une valeur cumulée de densités optiques spécifiques dans les 4 premières minutes du test (VOF(4)) allant de 100 min à 600 min, telle que mesurée sur un spécimen ayant une taille de 75 mm x 75 mm x 2 à 4 mm à une quantité de chaleur de 25 kW/m$^2$ conformément à la norme ISO 5659-2.

**8.** Composition de résine thermoplastique selon l'une quelconque des revendications 1 à 7, dans laquelle la composition de résine thermoplastique a une toxicité des fumées (CIT, indice de toxicité conventionnel) allant de 0 à 0,3, telle que mesurée sur un spécimen ayant une taille de 75 mm x 75 mm x 2 à 4 mm à une quantité de chaleur de 25 kW/m$^2$ conformément à la norme ISO 5659-2.

**9.** Produit moulé formé de la composition de résine thermoplastique selon l'une quelconque des revendications 1 à 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120078559
- KR 20190125583 A